Europäisches Patentamt

European Patent Office

Office européen des brevets

(11) Publication number: **0 028 858**
**B1**

# EUROPEAN PATENT SPECIFICATION

(45) Date of publication of patent specification: **12.10.83**

(51) Int. Cl.³: **A 22 C 11/00,
A 22 C 13/00**

(21) Application number: **80201040.5**

(22) Date of filing: **03.11.80**

(54) **Reusable tubular casing as well as apparatus comprising this casing and process for the production of skinless sausages, particularly parboil or raw sausages.**

(30) Priority: **09.11.79 CH 10067/79**

(43) Date of publication of application:
**20.05.81 Bulletin 81/20**

(45) Publication of the grant of the patent:
**12.10.83 Bulletin 83/41**

(84) Designated Contracting States:
**AT BE CH DE FR GB IT LI NL SE**

(56) References cited:
**DE - A - 2 313 994
DE - A - 2 756 995
FR - A - 1 202 533
FR - A - 2 336 884
GB - A - 998 410
US - A - 3 233 281
US - A - 3 421 434
US - A - 3 953 566**

(73) Proprietor: **Ashland Food Technology Holdings S.A.
13, Boulevard de la Foire
Luxembourg (LU)**

(72) Inventor: **Becker, Heinz
Wehrenbachhalde 30
CH-8035 Zürich (CH)**

(74) Representative: **Becher, Pauline, Dr. et al,
A. Braun Braun Héritier Eschmann AG
Holbeinstrasse 36-38
CH-4051 Basel (CH)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

# 0 028 858

**Reusable tubular casing as well as apparatus comprising this casing and process for the production of skinless sausages, particularly parboil or raw sausages**

This invention relates to a reusable tubular casing as well as an apparatus comprising this casing and a process for the production of skinless sausages, particularly parboil or raw sausages.

In general, the art recognized three types of sausages: cooking sausage, parboil sausage, and raw sausage. Cooking sausage has a higher fat and protein content and accordingly contains a smaller amount of water than the parboil sausage. For this reason cooking sausage releases practically no water during the heat treatment, and can therefore be produced in casings that are impermeable for water vapor and other gases evolved during the sausage-making process. For example, many organic polymeric materials that are impervious to water and steam, can be used as artificial casings with cooking sausages.

On the other hand, a larger amount of water is released during reddening and coagulation of parboil sausages, and during reddening and ripening of raw sausages.

Parboil sausage is produced from an emulsion in water of protein and fat. During the formation of this emulsion in high capacity comminution machines, ice is added for the purpose of cooling. For this reason, the sausage mix contains more water than is permissible in view of the required keeping quality of the sausage. Therefore, the sausage mix must release about 5 to 50% (as an average about 10%) of gaseous constituents, based on its fresh (unprocessed sausage mix) weight. These gaseous constituents consist for the most part of water vapor, but also contain aromatic constituents and other substances volatile under the conditions of the reddening and/or coagulation.

The reddening of parboil sausage occurs as a rule at about 35°C within approximately 15 minutes; the coagulation must be carried out at temperatures above about 45°C and takes place as a rule by heating in water or steam at temperatures between 70 and 100°C, usually at about 80°C in a relatively short time.

Almost all parboil sausages are smoked. It is a general practice to perform the smoking process after reddening, but before coagulation. Since the sausage casings in use at the present time have little permeability for smoke, the smoking process normally takes a long time.

Raw sausage is produced from a sausage mix which contains fat and meat pieces of various size. During the reddening and ripening process the sausage mix releases gaseous constituents from about 10 to 50%, based on its fresh (unprocessed sausage mix) weight. These gaseous constituents also consist for the most part of water vapor, however, they also contain aromatic constituents and substances volatile under the conditions of the reddening and/or ripening process.

The reddening and ripening of raw sausage occurs at temperatures not above 40°C, as a rule at around 20°C. The reddening and ripening proceed quite slowly during the course of a few days up to several months. Some types of raw sausages are also smoked. On other types of raw sausages, as for instance, salami, mold must be formed.

In former sausage making procedures, the sausage mix was stuffed into a natural gut and subsequently subjected to the treatment required by a particular type of sausage. Artificial casings made of various materials have been known for quite some time. Most of the natural guts and artificial casings used for sausages are inedible and must be removed before consumption. Therefore, it has become the practice to peel the sausage casing right at the production plant.

Another technique has been used in sausage making, namely the production of so-called skinless sausages, in order to reduce the expense incurred in peeling the sausage casings, the losses arising because the sausages break when the casings are peeled away, and, in addition, the quite sizable cost of the casings themselves.

According to German Patent Publication DE—OS No. 25 23 506, skinless sausages are produced continuously by a machine that is provided with numerous molds, which after removal of the formed and cooked sausage, and after cleaning of the mold, can be used again. One by one these molds pass through a fill station; a boiling or, as the case may be, a cooking oven; a cooling station; and a mold removal station; and between the mold removal station and the following fill station preferably a wash and/or cleaning station is provided (page 4). The molds are preferably made of a material having a low coefficient of friction, for instance "tetrafluoroethylene" (page 11). This designation obviously is to mean "polytetrafluoroethylene". It is, however, in no way suggested that the material used for the molds could be or were required to be permeable for gas.

German Patent Publication DE—OS No. 27 56 995 relates to a process and apparatus for the production of a skinless, strand-shaped sausage by means of a casing designed as a strand-shaped hollow body which is designated expressly as "practically medium-tight" or "practically medium-tight sealable". The inside of the hollow body may have a smooth non-adherent coating which, for instance, could be a layer of polytetrafluoroethylene (claim 6). According to the process described in DE—OS No. 27 56 995, the raw sausage mix is filled into the casing, then heated, if desired followed by cooling, and finally divided into suitable lengths. the pressure created during heating due to the expansion of the sausage mix causes a pressure seal which prevents vapors evolved during cooking to reach the casing exit (page 7). The process is said to be suitable for boiled finely minced pork sausages as opposed to smoked sausages (page 4).

2

It is also known that a special paper made into an endless tube can be impregnated with viscose (a viscous solution of cellulose xanthogenate, which is used for the production of viscose rayon, viscose staple fibers, viscose cellophane and viscose sponges), to form a tubular casing which has a degree of porosity which permits the exchange of moisture and vapors. Such viscose impregnated paper tubes can be used for sausages that are to be smoked, because their permeability allows for some penetration of smoke, at least to a degree that exceeds the smoke penetration through most other known sausage casings.

Experience has shown that all known reusable but nonporous casings are not suitable for the production of sausage types which must release water vapor and other gaseous constituents. It is, of course, not possible to remove the water vapor and other gaseous constituents from the sausage mix before it is filled into the casing. These constituents must instead be released from the sausage mix while it is within the casing, but before coagulation, because the integral cohesive surface formed during the coagulation is no longer sufficiently permeable for gases.

Also, a previous effort to use a finely perforated sausage casing having a large number of holes per square centimeter proved to have severe shortcomings with respect to providing a smooth outer cohesive sausage surface, and presented cleaning problems.

A reusable porous casing for the production of skinless parboil or raw sausages must meet the following requirements:

1. The casing must have a sufficiently high permeability for water vapor and other gases, like oxygen and aromatic constituents. A prior art cellulose material which, however, is suited for one time use only, may release for instance 5.5 $\mu$l of water vapor per minute per square centimeter. Similar characteristics are desirable for reusable casings.

2. The casing, even if used many times, must neither release constituents injurious to health nor may it adversely affect the taste, smell or appearance of the sausage.

3. The pores of the casing must not, or at least only to a small degree, become plugged with fat, so that their permeability is not decreased.

4. The casing must be easy to clean.

5. The casing must have a continuous thermal tolerance up to at least 200°C.

6. The casing must have good mechanical stability and be pliant.

7. The casing must not adhere to the sausage mix.

8. The internal surface of the casing must contain openings that are small enough so that the sausage's integral cohesive surface has a smooth appearance.

It has now been found that a porous polytetrafluoroethylene membrane with a microstructure comprising polytetrafluoroethylene nodes which are connected with each other by polytetrafluoroethylene fibrils, is suited for this purpose. This material can be produced having sufficiently small fibril lengths to yield effective pore sizes no more than 1.0 $\mu$m, preferably no more than 0.5 $\mu$m, and optimally no more than 0.2 $\mu$m. It is also preferred that the membrane have a nominal thickness of 0.01 to 5 mm and a nominal porosity of 30 to 90% and particularly 70 to 80%. Membranes of this type, their characteristics and production, are known from U.S. Patents No. 3,953,566 and No. 3,962,153 as well as the corresponding German Publications DE—AS No. 21 23 316 and DE—OS No. 24 17 901; therefore they need not be described in detail.

The sausage casings of the invention are described in claims 1 to 3.

These polytetrafluoroethylene membranes which can be used to produce the casings of the present invention have sufficient porosity to permit venting radially through the casing, the gaseous constituents (such as water vapor and aromatic constituents) released during processing from the sausage mix contained in the casing. The membranes also have a surface texture to provide easy release of the processed sausage having an integral cohesive surface from the casing following processing while maintaining the integrity of the sausage surface and the sausage as a whole. Furthermore, the gaseous fluid flow paths through the node and fibril microstructure of the membrane limits the extrusion of solid or liquid constituents of the sausage mix through the membrane during filling of the casing, thus preserving the desired high degree of porosity and low adhesion between the sausage mix and casing inner wall.

As defined in U.S. Patent No. 3,953,566 and as used herein, porosity is equal to the void fraction (fv) of the volume of the polytetrafluoroethylene membrane expressed as a percentage. That is, porosity Q is defined as follows:

$$Q = fv \cdot 100$$

Moreover,

$$fv + fp = 1$$

where fp is the polymer fraction of the volume of the polytetrafluoroethylene membrane. The void fraction fv can be calculated from the specific gravity of the membrane (SG) and the specific gravity of polytetrafluoroethylene ($SG_p$) as follows:

**O O28 858**

$$fv = 1 - \frac{SG}{SG_p}$$

where $SG_p$ is generally equal to about 2.15. Thus the porosity can be determined by approximation from the following relationship:

$$Q = (1 - \frac{SG}{2.15})100$$

The required permeability $D_G$ of the membrane for gases (water vapor, aromatic constituents, etc.) at the particular treatment temperature for a certain type of sausage is easily calculated with near accuracy, if one
a) assumes that the specific weight of the raw sausage mix is equal to 1,
b) does not take into account the sausage ends possibly present,
c) knows the amount of water to be released in %, based on the raw sausage mix, and
d) knows the time available for the release of the gases at the particular temperature.
Given these prerequisites the Volume $V_w$ of the sausage therefore is:

$$V_w = \pi R^2 L$$

and the surface area $O_w$ of the sausage is:

$$O_w = 2\pi RL$$

where R is the radius and L is the length of the sausage. If the amount of water to be released in percent (%), based on the raw sausage mix, is designated as $P_w$ and the time available for the release of the gases at a given temperature T is designated as $t_T$, the required permeability for gases at the temperature T is as follows:

$$D_G = \frac{\pi R^2 L \times P_w}{2\pi RL \times t_T} = \frac{R \times P_w}{2t_T}$$

Therefore, it follows that the bigger the radius (or the diameter) of the sausage, and the larger the amount of water to be released, the higher the gas permeability of the membrane must be; and the gas permeability can also be that much smaller the more time that is available for the release of gas.

A polytetrafluoroethylene membrane of the above-mentioned type which is especially suitable for the production of parboil sausage, like hot dogs, vienna sausages, frankfurters, Lyon sausage, Mortadella and so on, has the following characteristics:

| | |
|---|---|
| a) effective size of pores | maximum 0.2 $\mu$m |
| b) thickness | 0.076 mm (0.003 inches) |
| c) porosity | 78% |
| d) density | 0.4 g/cm$^3$ |
| e) air permeability | minimum 215 cm$^3$ per minute and per 6.45 cm$^2$ (square inch) at 124 mm (4.88 inches) of water |
| f) the time required for 500 cm$^3$ of methanol to pass thru 9,6 cm$^2$ area of the membrane at 21°C and a vacuum of 686 mm (27 inches) of mercury (Hg): | maximum 120 seconds |
| g) water entry pressure | minimum 2.8 kg/cm$^2$ (40 pounds per square inch) |
| h) bubble point (methanol) | minimum 0.91 kg/cm$^2$, maximum 1.55 kg/cm$^2$ (minimum 13, maximum 22 pounds per square inch) |
| i) the time required for 100 cm$^3$ of air to pass thru 6.45 mm (1 square inch) of the membrane area at 124 mm (4.88 inches) of water | maximum 28 seconds |

Measurements (e) and (i) are typically done with the apparatus and procedure detailed in the U.S. Standard "ASTM Method D-726-58 Method A" using 6.45 cm$^2$ (1.00 square inch) test area, and 124 mm (4.88 inches) of water. The measurement in (i) represents the "Gurley Number" of the membrane.

4

Measurements (f) and (h) are typically done with the apparatus and procedure detailed in the U.S. Standard "ASTM Method F-316-70", using anhydrous methanol at 21°C and a 9.6 cm² test area. Measurement (h) gives the Bubble Point Pressure.

Measurement (g) utilizes apparatus employed in the Mullin's Burst Test (U.S. Standard "Federal Standard 191, Method 5512"). The test procedure consists of raising the pressure of water to a test level over a period of approximately 10 seconds, holding the pressure at that level for 30 seconds, and visually determining the presence or absence of water leakage. The lowest water pressure at which leakage is observed is the Water Entry Pressure of the membrane.

Preferred ranges for the properties of the porous polytetrafluoroethylene membrane are as follows:

thickness:
0.04 mn—0.09 mm
(0.0015—0.0035 inches)
weight/area:
2.79—4.03 mg/cm²
density:
0.44—0.63 g/cm²
(corresponds to a porosity of about 70—80%)
Gurley No.:
28 seconds maximum, any measurement
20 seconds maximum, average of any eight measurements
Bubble Point Pressure:
0.91 kg/cm² (13 psig) gauge minimum, any measurement
1.10 to 1.55 kg/cm² gauge (15.6 to 22 psig), average of any eight measurements
Water Entry Pressure:
2.8 kg/cm² gauge (40 psig), minimum, any measurement

This membrane is also suitable for the production of raw sausage, like cervelat or salami sausage; in view of the fact that the release of gas in the case of raw sausage occurs at lower temperatures over a longer period of time, the permeability of the membrane may also be smaller.

By the term "membrane" is meant a relatively thin soft pliable self-supporting sheet, and no specific limitations insofar as the length and width are intended.

The casings may be seamless tubes or can be produced from flat stock as for instance by heat or ultrasonic welding, by adhering or sewing. For example, a tapelike membrane may be wound helicoidally into a tube. The casings may consist wholly or for the most part of the above-designated membranes.

It is preferable, for reasons of the mechanical load capacity, that the casing is supported by reinforcing elements contacting at least a fraction of its outside surface area. Apparatus of this type is described in claims 4 to 8.

The polytetrafluoroethylene membranes used in accordance with the invention, are food-technologically acceptable, thermally stable between —20 and +250°C, resistant to diluted acids and lyes as well as common cleaning agents, and are not changed by the effects of ultrasonic and microwaves. The use of these membranes makes it possible to change the production method of parboil and raw sausages, as compared with the customary process, in an advantageous manner.

Up to now, machines were used to fill the casings with the sausage mix. The filled casings were arranged on spits and then subjected in smoke chambers to, in sequence:

Reddening
drying
smoking
cooking or parboiling
cooling.

After leaving the smoking chambers, the sausage casings may be removed, e.g. by peel machines, in order to produce "skinless" sausages. For this process a relatively large amount of manual labor is required.

The capital investment of a plant for the production of sausages with reusable casings depends mainly on the period of time required for the sausage to remain in the casing; therefore this time must be kept to a minimum. A portion of the reddening process should therefore preferably take place before the sausage mix enters the casings. The smoking can be done after the shaped, coagulated and cooled sausage is ejected from the casing because the reddening and coagulating steps provide a thin integral skin on the sausage that enables the sausage to be handled. The release of water vapor and other gaseous constituents, however, must occur at the beginning of the heating cycle and before coagulation, while the sausage is still in the casing. Microwave heating is ideally suited for shortening the coagulation step.

The process of the invention for the production of skinless sausages, particularly raw or preferably parboil sausages, is defined in claims 9 and 10.

The production of parboil sausage can e.g. proceed as follows:

a) The raw sausage mix is pre-reddened in a mixing machine under exclusion of oxygen.

b) The sausage mix is filled into reusable casings or apparatus comprising these casings by means of known rotary machines such as tube filling machines, paste filling machines or portioning machines. The casings are produced from a water-vapor permeable membrane that is pliable, heat stable and non-adherent to the sausage mix.

c) The filled casings or apparatus are then heated to approximately 35°C to attain a desired degree of redness in a continuous reddening apparatus as, for example, by convection heating.

d) Subsequently the filled casings or apparatus are heated for the coagulation step to about 80°C, as, for instance, in the customary way by steam or hot air or specially advantageously by means microwave energy which so far, to the knowledge of the inventor, has not been used for this purpose.

e) Next, the filled casings or apparatus are cooled, for example, by means of cold water, cold air, liquid oxygen, etc.

f) Now the casings or apparatus are opened, e.g. by automatic removal of the end caps, after which the sausage is ejected, for instance, by compressed air. The empty casings are returned in a closed cycle to the fill station, and in suitable intervals cleaning takes place, as for instance by ultrasonic waves.

g) The sausages are subsequently either continuously or intermittently smoked, suitably on appropriate conveyors or special racks having only a small contact area with each sausage. The tanning effect of the smoke substantially contributes to the formation of an integral skin on the sausage.

h) Subsequently the sausages are cooled and are ready for shipment.

The following describes a preferred embodiment of the apparatus for the production of skinless sausage, as shown on the attached drawing.

Fig. 1 shows a simplified sectional view of one of the end segments of an apparatus in accordance with the present invention for the production of sausage.

Fig. 2 is a simplified perspective view of the apparatus shown in Fig. 1.

Fig. 3 is a perspective view of the retaining ring portion of the apparatus.

Fig. 4 is a vertical section of the apparatus with the upper part removed.

Fig. 5 shows a cross-section of the end segment of the completely assembled apparatus.

Fig. 6 is an exploded view in perspective of a structural detail.

Fig. 7 shows the complete apparatus in simplified perspective.

Fig. 8 is a front view of the apparatus.

Fig. 9 is a longitudinal cross-section of a variation of the apparatus of the invention.

Fig. 10 shows the variation in Fig. 9 in perspective.

Fig. 11 shows a cross-section of the end segment of yet another version of the apparatus of the invention.

Fig. 12 is an exploded view in perspective of the version shown in Fig. 11.

Fig. 13 is a section along plane XIII/XIII of the version shown in Fig. 12.

In the drawing, the reusable tubular sausage casing bears the numeral 5. It consists of a porous polytetrafluoroethylene (PTFE) membrane, the properties of which were discussed earlier. Tubular casing 5 is shown in the shape of a hollow circular cylinder but the scope of the present invention is not intended to be so limited.

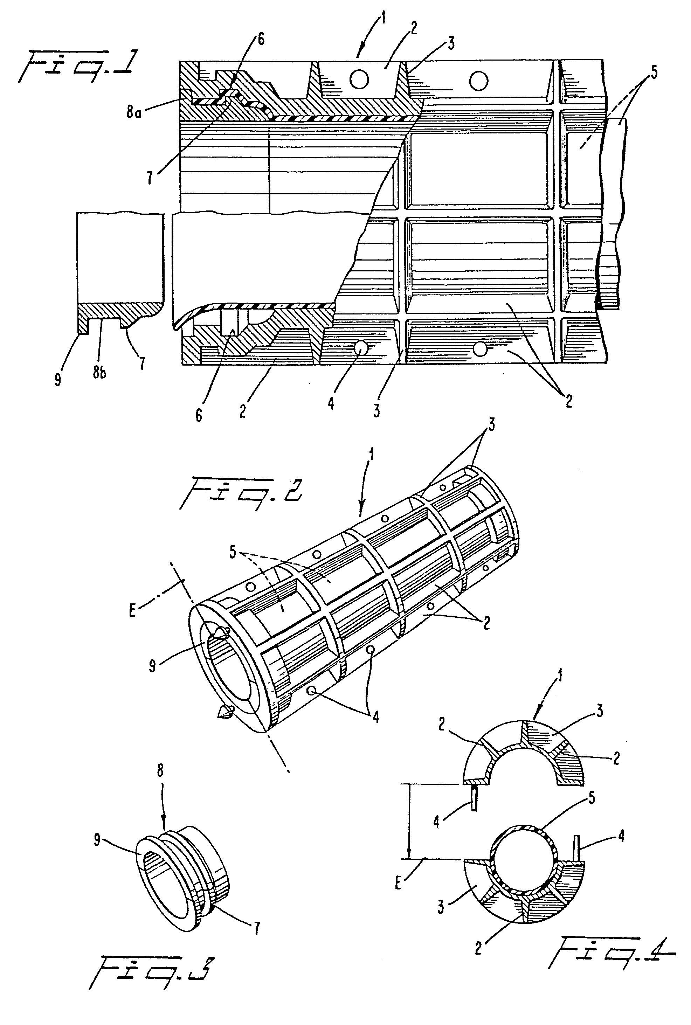

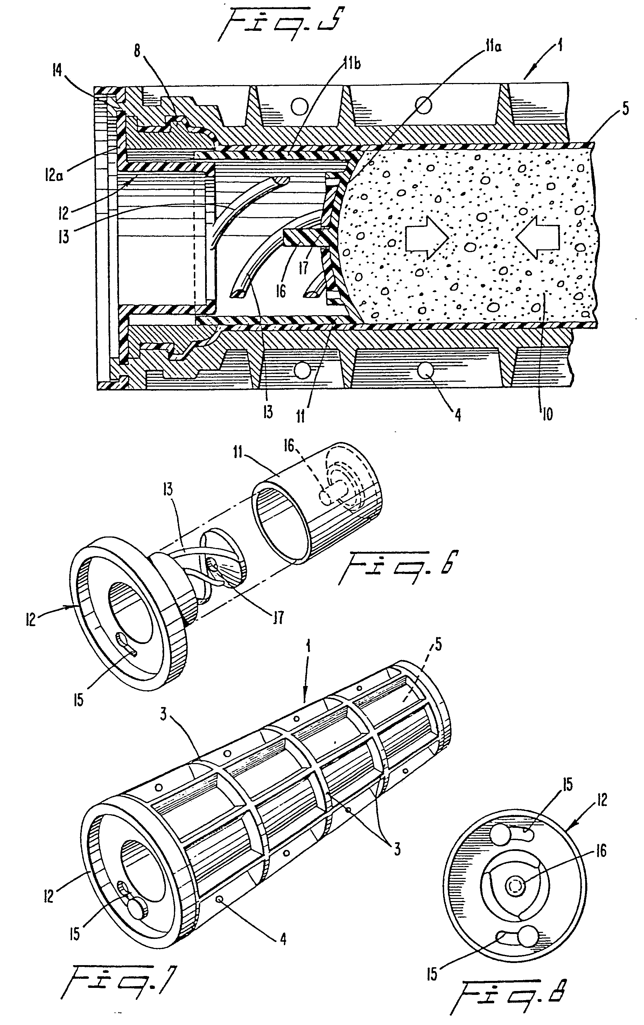

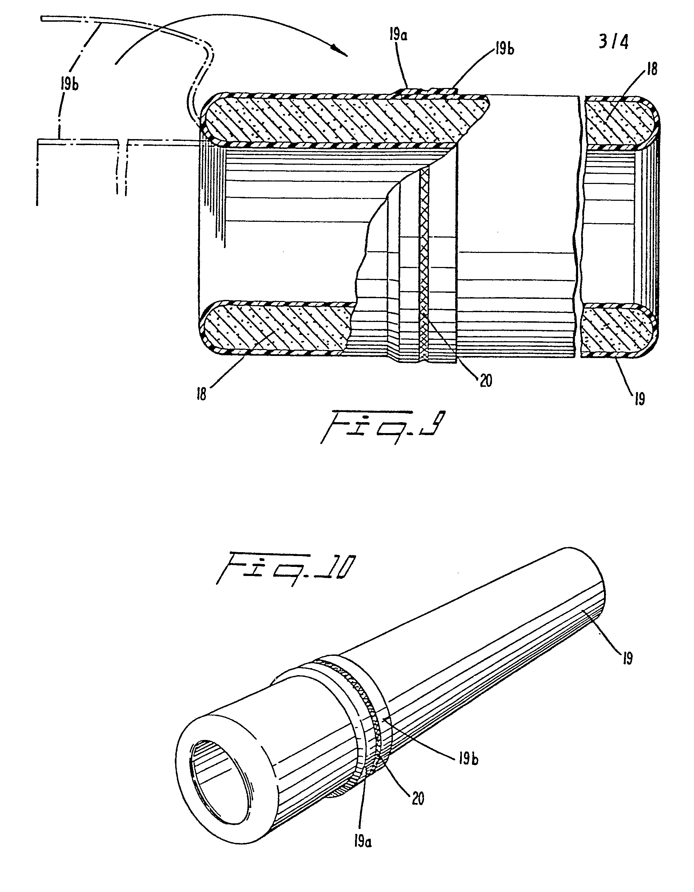

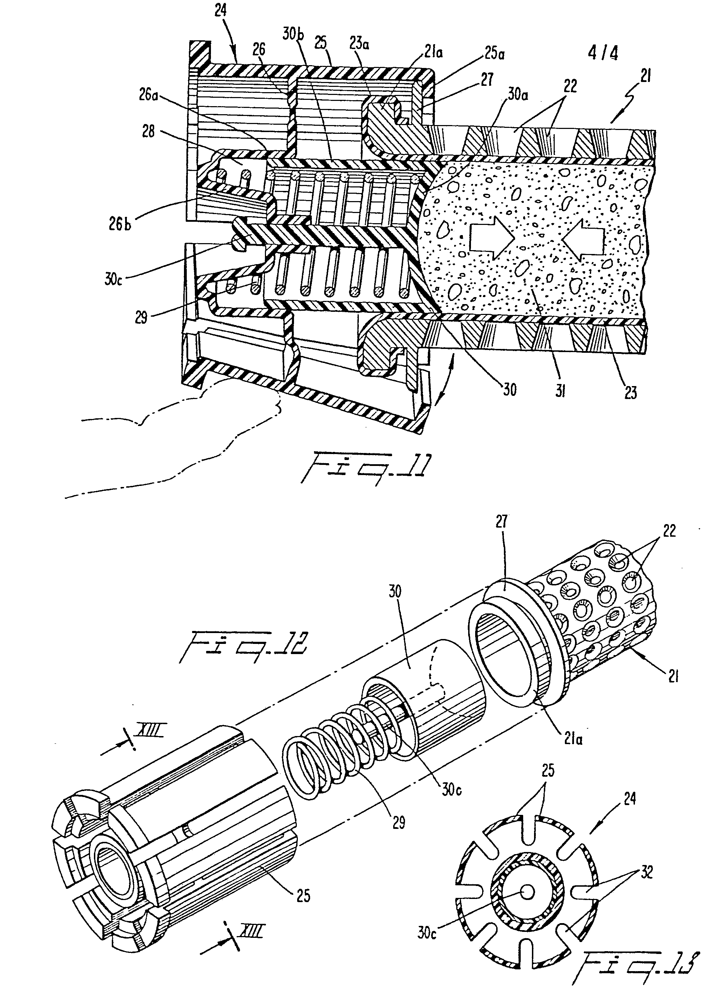

In the apparatus of the invention, at least a fraction of the outside surface of the casing 5 is supported by support elements which are shown in the drawing as a lattice structure 1. A preferred embodiment of the apparatus, which is shown in Fig. 2 and 7, comprises a support structure designated in its entirety by 1, which is composed of parallel longitudinal ribs 2, and ring-shaped cross ribs 3 in a lattice arrangement. The lattice structure 1 is designed in two parts, that is, it is divided into practically equal halves along a parting plane designated E in Fig. 2. The two halves are connected along the parting plane by screws 4 for possible disassembly (compare in this connection also Fig. 4). The longitudinal ribs 2 and cross ribs 3 are aligned with their inside edges along an imaginary cylinder which corresponds to the diameter of the sausage to be produced.

Inside the lattice structure 1 a tubular casing 5 which is made of the above defined porous PTFE membrane is fastened to the lattice structure 1 at its end sections. For this purpose the ends of the longitudinal ribs 2 are provided with a circular groove 6 which matches and/or engages the shoulder 7 of retaining ring 8 (Fig. 3). The outermost end section of the retaining ring 8 is shaped into a circular flange 9. In a preferred embodiment, the retaining ring 8, as Fig. 1 shows, is divided into two equal halves 8a/8b. Thereby the end section of the casing 5 is easily fastened to the lattice structure 1 by pushing the two retaining ring halves 8a/8b into it until the shoulder 7 snaps into the groove 6 thus capturing the casing 5 within the lattice structure 1.

During the treatment the sausage mix 10, as depicted in Fig. 5, expands under the influence of heat and subsequently contracts again during cooling. An apparatus for compensating for the resulting change in volume of the sausage was developed and is shown in Figs. 5 to 8.

As shown in Fig. 5, a floating piston 11 is positioned within the retaining ring 8. Piston 11 is provided at one end with a concave end surface 11a whose shape matches the contour of the end of the sausage to be produced. A cylindrical guide sleeve 11b is adjacent to the piston end surface 11a, which in a preferred design only glides on the inner surface area of the retaining ring 8 and thus does not even come in contact with the inner surface of the more easily vulnerable casing 5. An insert designated by 12 carries a plastic coil spring 13 on the side facing the piston 11, which spring rests against the curved wall of piston 11, and according to Fig. 5, tends to press or bias the piston to the right. Thus it is assured that the piston always rests against the outer area of the sausage 10 and that changes in volume of the sausage mix are automatically compensated by the elasticity of the spring 13.

The insert 12 is substantially cup-shaped like a pot and.has on its vertically arranged circular flange 12a (as shown in Fig. 5) two key-hole-like slots 15 with which it can be mounted for removal in customary fashion on studs 14 of the lattice structure 1. In this way it is sufficient to put the insert 12 with the slots 15 having their wider section aligned over the stud 14. By turning insert 12 slightly, the studs 14 securely engage the insert.

As Fig. 6 shows, the piston is provided with a guide pin 16 in the center part of its curved end surface 11a which, during insertion of the insert 12, engages with a bored hole 17 in the insert and thus provides a secure alignment of the two parts.

The invention can be altered in numerous ways by any person skilled in the art, as for instance, it is of course not necessary to support the casing 5 around its circumference by a lattice structure, but some type of pipe with a solid but porous wall could be used as well. A pipe of this type could preferably consist of a porous, non-metallic, air permable material, for instance, sintered glass. In this case, retaining parts for the removable attachment of the casing 5 would also have to be provided for both end sections of the pipe.

If the sausage 10 is to be removed from the described device, it is sufficient to take off insert 12 and piston 11, and eject the sausage from the casing 5 by compressed air. The casing 5, which remains in the apparatus, is washed and reused in the following manufacturing process.

It would also be possible to design the above-mentioned pipe in form of two half-cylindrical shells (not shown) which are fastened to an endless conveyor system (not shown) and are joined to form a complete pipe for the support of the casing 5 shortly before introducing the sausage mix. For the removal of the sausage the half-shells could be parted again by the conveyor system.

Instead of the curved end surface 11a of the piston 11, a flat surface could be used advantageously for a sausage which is to be sliced before it is sold. In this configuration, no waste is created during slicing.

In Figure 9, which depicts another embodiment of the apparatus, the apparatus has a pipe 18 which may be formed of a sintered metal, such as sintered stainless steel, or preferably of a porous, non-metallic air permeable material (for example, sintered glass). A tubular casing 19 of porous PTFE membrane, as described before, is laid around the pipe 18 as to completely encase the inner and outer surface of the pipe with the casing ends 19a/19b turned back and overlapping each other on the outer surface of the pipe where they are welded (heat-sealed) together in a circular welding seam 20.

Fig. 9 depicts in dashed lines how the one casing end 19b is turned back around the end section of the pipe 18 in the direction of the arrow until it overlaps the other casing end 19a.

Another variation of apparatus in accordance with the present invention and shown in Figure 11 includes a pipe 21 which, for instance, can be formed of stainless steel or an adequate artificial material such as polyamide or sintered, unstretched polytetrafluoroethylene, and provided with numerous holes 22. A porous PTFE casing 23 of the type defined above is turned back around the flanged end 21a of the pipe 21 at the position 23a and thus secured at the pipe end 21a by stretching over the flange.

A cap 24 is divided in the direction of the circumference into several retaining fingers 25 (also compare Fig. 12), which are mounted on a circular rib 26 and can pivot lever-like on their mounting point. One end 25a of each retaining finger 25 which is turned toward the inside engages in its end position a support flange 27 integral with pipe 21.

A recess 28 in the rib 26 houses a coil spring 29 whose opposite end is compressed against the curved end face 30a of the piston 30. The cylindrical sleeve 30b of the piston 30 which is adjustably positioned in a corresponding section 26a of the rib 26 as well as in the pipe 21, could however, also be slidingly supported (in order to protect the casing) in section 26a only. In this way the piston 30 is resiliently pressed or biased against the end of the sausage mix 31 and thus balances the expansion and contraction of the sausage mix as shown by the two arrows.

With its guide sleeve 26b which may be pushed over the end section of a guide bar 30c which is integral with the piston 30, the cap 24 functions as a centering and guiding device for the piston 30. As demonstrated in the lower portion of Figure 11, the cap 24 can be disengaged and pulled off, if need be, by depressing with finger pressure.

The spring 29 not only serves for the compensation of changes in volume of the sausage mix 31, but also exerts an oppositely directed force on the cap 24, so that the end of the retaining finger 25a is

7

forced against the support flange 27; simultaneously the end of the retaining finger 25a also can exert a pressure in a radial direction which contributes to holding the casing 23 in place.

As Fig. 13 shows, the cap 24 essentially consists of a heavy-walled tube made of synthetic material and whose wall is provided with several parallel slots 32 which are directed radially toward the inside.

Parboil sausages typically have diameters of from 15 to 200 mm, some of them also more. For instance, a sausage weighing 55 g and having a diameter of 22 mm can be warmed (for instance by microwaves) to 35°C for 15 minutes for the process of reddening and ripening, and heated to 80°C for 3 minutes for the coagulation by microwaves. Thereby the raw sausage mix releases 5 g of steam in the course of 18 minutes.

Should the coagulation take place by means of microwave energy, the casings and/or apparatus used must not contain any metallic constituents. In this case the support elements of the apparatus advantageously consist of perforated synthetic materials like polyamide or sintered unstretched polytetrafluoroethylene.

The coagulation process by means of microwaves can take place in such a way where the filled casings and/or apparatus are passed thru a stream of microwaves at a set cycle. While passing thru the microwaves, the casings and/or apparatus are rotated as described later, in order to assure an even heating. Heat is not applied from the outside, but is produced simultaneously and nearly evenly throughout the entire volume of the sausage mix, so that coagulation advances from within to the outside.

Heat generation in the sausage mix starts instantly at actuation of the microwave energy and stops just as abruptly when turned off. Since no heat transfer medium need be heated with microwave equipment and only extremely little heat is dissipated to the environment, significant energy savings are possible.

During microwave heating, the various components of the sausage mix, namely water, fat and protein, are heated to different degrees. In addition, because the energy absorption is dependent on the temperature on account of the temperature dependence of the dielectric constant, local (spot) overheating may take place. To avoid this, microwave heating is advisably applied periodically in order to allow the temperature of the sausage mix to become balanced. Good results are obtained when the duration of the first heating period amounts to no more than 50 seconds, the duration of the following heating periods is shortened by about 30% each, as compared to the preceding heating period, and the duration of the heating intervals, starting at 10 seconds, be increased until the heating intervals are equal to the heating periods. The heating intervals can be obtained by using a plurality of sources of microwaves with a specific distance between the sources along the process path. In such application, it is advantageous to position between the microwave sources a different type of heating unit, for instance infrared heating, in order to avoid the cooling of the sausage mix and to further accelerate coagulation.

The selection of power output of the microwave sources is of great importance for fast and even coagulation. Although the speed of coagulation is accelerated by increased power output, the evenness of the coagulation decreases. On the other hand, too small a power output is uneconomical on account of too slow a production speed. However, it is easily possible for those skilled in the art to determine the proper parameters.

Rotation of the filled casings and/or apparatus during the microwave heating process is indispensable since adjoining casings or apparatus shield or block each other from the microwaves. The period of rotation should be shorter by more than one order of magnitude than the period required for coagulation. This amounts to at least about 12 revolutions per minute.

The use of the new casings and/or apparatus and/or process of the invention provides a sausage that has far superior resistance to bacterial contamination than sausages produced in the usual water-vapor impervious, one-use, cellulosic casings, which is the present industry standard for frankfurter production. Because the smoking step can be performed on the sausage itself after release from the casing, with no cellulosic membrane of varying permeability to smoke, the tanning effect of the smoking step is more uniform and provides superior resistance of the sausage to bacterial contamination. Also, there is no danger of cutting into the sausage during removal of the casing which is possible during peeling the prior art casings. In the conventional peeling step the integrity of the cohesive surface of the sausage is often locally destroyed so that bacteria may enter into the interior of the sausage.

The invention permits a faster sausage making procedure by using microwaves in the reddening and coagulation steps. Also, the smoking step can proceed at a much faster rate, because the integral skin of the sausage is no barrier to the smoke such as exists when a cellulosic casing is used. The invention permits production of sausages with less labor than the use of cellulosic casings, indeed, the invention permits manufacture of sausage without contact with human hands.

**Claims**

1. A reusable tubular casing for the production of skinless sausages, particularly parboil or raw sausages, characterized in that the casing consists at least for the most part of a porous polytetrafluoroethylene membrane, said membrane

a) having a microstructure made up of nodes interconnected by fibrils and comprising, due to this microstructure, flow paths for gases and liquids which substantially prevent the extrusion of solid or liquid constituents of the sausage mix through the membrane during filling of said casing,

b) having sufficient porosity to permit venting radially through said casing the steam and other gaseous constituents released during processing from the sausage mix contained within said casing,

c) having a surface texture to provide easy release of the sausage produced by processing the sausage mix from said casing while maintaining the integrity of the sausage surface (that is its integral skin) and the sausage as a whole,

d) having the following permeability properties:

(i) a Gurly Number of 1 to 650 seconds, as determined according to the U.S. Standard "ASTM Method D-726-58 Method A" using a 6.45 cm² (1.00 square inch) test area, 124 mm (4.88 inch) water pressure drop and representing the time in seconds to flow 100 cm³ of air through the test area,

(ii) a Bubble Point Pressure of 0.21 to 4.2 kg/cm² (3 to 60 pounds per square inch) gauge, as determined according to the U.S. Standard "ASTM Method F-316-70", using anhydrous methanol at 21°C and a test area of 9.6 cm²; and

(iii) a Water Entry Pressure of 0.49 to 42 kg/cm² (7 to 600 pounds per square inch) gauge, as determined by the following procedure: using the apparatus employed in the Mullin's Burst Test according to the U.S. Standard "Federal Standard 191, Method 5512" the pressure of water is raised to a test level over a period of approximately 10 seconds and held at that level for 30 seconds, the Water Entry Pressure being the lowest pressure level at which leakage is visually determined to occur.

2. The casing according to claim 1, characterized in that said membrane

(a) has a thickness of 0.01 to 5 mm, and
(b) has a porosity Q of 30 to 90%, Q being defined as follows:

$$Q=(1-\frac{SG}{2.15})100$$

where SG is the specific gravity of said polytetrafluoroethylene membrane.

3. The casing according to claim 1 or 2, characterized in that a flat tape of said membrane is wound helicoidally to form a tube and that its overlapping edges are joined with each other.

4. An apparatus for the production of skinless sausages, particularly parboil or raw sausages, comprising a tubular casing according to any one of claims 1 to 3, for raw sausage mix, characterized in that at least a fraction of the outside surface of said casing is supported by support elements.

5. The apparatus according to claim 4, characterized by a lattice structure (1) having a plurality of parallel longitudinal ribs (2) arranged at the periphery of an imaginary cylinder and reinforced by ring-shaped cross-ribs (3) and a retaining ring (8) provided at each end of the lattice structure (1) having a shaped cross-ribs (3) and a retaining ring (8) provided at each end of the lattice structure (1) for releasably securing the ends of casing (5).

6. The apparatus according to claim 4 or 5, characterized in that said support elements comprise a tubular support sleeve having a solid but porous wall and, at each of its end faces, one means for securing the ends of the casing in an easily releasable way, said support sleeve consisting preferably of a sintered metal or a porous, air permeable non-metallic material, such as sintered glass.

7. The apparatus according to claim 6 characterized in that the ends of the casing (23) are turned back around the end portion (21a) of the support sleeve (21) and that each end portion (21a) of said support sleeve comprises a support flange (27), the pivotable retaining fingers (25) of a cap (24) being secured to flange (27), the cap (24) having a recess (28) housing a coil spring (29) whose opposite end is adjacent to end face (30a) of a floating piston (30) positioned in cap (24) for axial motion (Fig. 11 to 13).

8. The apparatus according to claim 6, characterized in that the casing (19) is laid around the support sleeve (18) as to completely encase the latter, with the casing ends (19a/19b) overlapping each other on the outer surface of support sleeve (18) and the overlap comprising a circuit welding seam (20) (Fig. 9 and 10).

9. A process for the production of caseless sausages, particularly raw or preferably parboil sausages, using the casing according to claim 1, characterized by

1) automatically stuffing the optionally prereddened sausage mix into said reusable tubular casings or into apparatus comprising such casings wherein at least a fraction of the outside surface of said casings is supported by support elements,

2) first continuously warming the filled casings, in order to effect or complete the reddening of the sausage mix,

3) thereafter continuously heating the filled casings, in order to form an integral skin by superficial coagulation of the sausage mix,

4) then cooling and finally opening the ends of the filled casings and

5) ejecting the sausages in the axial direction without damaging the integral skin or the sausage as a whole and returning the empty casings to the stuffing device,

gaseous constituents released from the sausage mix during reddening and coagulation being vented radially through the porous membrane.

10. The process according to claim 9, characterized by using casings or apparatus according to any one of claims 1 to 8.

## Patentansprüche

1. Mehrfach verwendbare schlauchförmige Hülle zur Herstellung von hüllenlosen Würsten, insbesondere Brüh- oder Rohwürste, dadurch gekennzeichnet, dass die Hülle mindestens zum grössten Teil aus einer porösen Polytetrafluoroäthylenmembran besteht, wobei die Membran

a) eine Mikrostruktur hat, die aus Knoten besteht, die miteinander durch Fibrillen verbunden sind, und infolge dieser Mikrostrucktur nur derartige Wege für den Durchtritt von Gasen und Flüssigkeiten aufweist, dass praktisch keine festen oder flüssigen Bestandteile der Wurstmasse während des Füllens der Hülle durch die Membran ausgepresst werden,

b) eine so hohe Porosität hat, dass der Wasserdampf und die anderen gasförmigen Bestandteile, die während der Behandlung einer in der Hülle befindlichen Wurstmasse abgegeben werden, in radialier Richtung durch die Hülle auszutreten vermögen,

c) eine solche Oberflächenbeschaffenheit hat, dass die durch die Behandlung der Wurstmasse erzeugte Wurst sich leicht von der Hülle zu lösen vermag, ohne dass die Oberfläche der Wurst (d.h. ihre Eigenhaut) und die Wurst als Ganzes beschädigt wird,

d) folgende Durchlässigkeitseigenschaften hat:

(i) eine "Gurley Number" von 1 bis 650 Sekunden, die nach der US-Norm "ASTM Method D-726-58 Method A" unter Anwendung einer Testfläche von 6,45 cm² (1,00 Quadratzoll) und eines Druckabfalls von 124 mm (4,88 Zoll) Wassersäule bestimmt ist und die Zeit in Sekunden darstellt, in der 100 cm³ Luft durch die Testfläche strömen;

(ii) einen Sprudelpunkt-Ueberdruck von 0,21 bis 4,2 kg/cm² (3 bis 60 englischen Pfund pro Quadratzoll), bestimmt nach der US-Norm "ASTM Method F-316-70" unter Verwendung von wasserfreiem Methanol bei 21°C und einer Testfläche von 9,6 cm²; und

(iii) einen Wassereintritts-Ueberdruck von 0,49 bis 42 kg/cm² (7 bis 600 englischen Pfund pro Quadratzoll), bestimmt unter Verwendung des Mullingerätes für den Berstversuch gemäss der US-Norm "Federal Standard 191, Method 5512" mittels des folgenden Verfahrens: Der Wasserdruck wird im Verlauf eines Zeitraums von annähernd 10 Sekunden auf einen Testwert erhöht und 30 Sekunden lang auf diesem Wert gehalten und der niedrigste Druck, bei dem visuell Undichtheit festgestellt werden kann, als Wassereintrittsdruck angegeben.

2. Hülle nach Anspruch 1, dadurch gekennzeichnet, dass die Membran

a) eine Dicke von 0,01 bis 5 mm hat und

b) eine Porosität Q von 30 bis 90% hat, wobei Q wie folgt definiert ist:

$$Q=(1-\frac{SG}{2,15})100$$

wobei SG das Dichteverhältnis bzw. die Dichtezahl ("specific gravity") der Polytetrafluoräthylenmembran bedeutet.

3. Hülle nach Anspruch 1 oder 2 dadurch gekennzeichnet, dass ein flaches Band der Membran schraubenlinienförmig zu einem Schlauch aufgewickelt ist und seine überlappenden Ränder miteinander verbunden sind.

4. Vorrichtung zur Herstellung von hüllenlosen Würsten, insbesondere Brüh- oder Rohwürsten, mit einer schlauchförmigen Hülle nach einem der Ansprüche 1 bis 3, für rohe Wurstmasse, dadurch gekennzeichnet, dass mindestens ein Bruchteil der Umfangsfläche der Hülle durch Stützelemente abgesützt ist.

5. Vorrichtung nach Anspruch 4, gekennzeichnet durch eine Gitterstruktur (1) mit mehreren parallelen, am Umfang eines gedacthen Zylinders angeordneten Längsrippen (2), welche durch ringförmige Querrippen (3) versteift sind, und durch einen Haltering (8) an jedem Ende der Gitterstruktur (1) zur lösbaren Befestigung der Hüllenenden.

6. Vorrichtung nach Anspruch 4 oder 5, dadurch gekennzeichnet, daß die Stützelemente eine vollwandige, aber poröse rohrförmige Stützhülse umfassen, welche an beiden Stirnseiten je eine Vorrichtung zur leicht lösbaren Halterung der Hüllenenden besitzt, wobei die Stützhülse vorzugsweise aus einem Sintermetall oder einem porösen, luftdurchlässigen, nicht metallischen Material, beispielsweise Sinterglas, besteht.

7. Vorrichtung nach Anspruch 6, dadurch gekennzeichnet, dass die Hüllenden (23) um die Endabschnitte (21a) der Stützhülse (21) herumgelegt sind und dass jeder Endabschnitt (21a) der Stützhülse einen Stützflansch (27) aufweist, an welchem die schwenkbaren Haltefinger (25) einer Kappe (24) verankert sind, wobei die Kappe (24) eine Ausnehmung (28) aufweist, in welcher ein Schraubenfeder (29) abgestützt ist, deren anderes Ende an der Stirnfläche (30a) eines beweglich in der Kappe (24) gelagerten Kolbens (30) anliegt (Fig. 11 bis 13).

8. Vorrichtung nach Anspruch 6, dadurch gekennzeichnet, dass die Hülle (19) so um die Stützhülse (18) herumgelegt ist, dass sie dieselbe allseitig umschliesst und sich die Hüllenenden (19a/19b) auf der Aussenseite der Stützhülse (18) überlappen, wobei die Ueberlappungsstelle eine ringförmige Schweissnaht (20) aufweist (Fig. 9 und 10).

9. Verfahren zur Herstellung von hüllenlosen Würsten, insbesondere Roh- oder vorzugsweise Brühwürste, unter Verwendung der Hülle nach Anspruch 1, dadurch gekennzeichnet, dass man.

1) die gegebenenfalls vorgerötete rohe Wurstmasse automatisch in die mehrfach verwendbaren schlauchförmigen Hüllen oder in Vorrichtungen, die derartige Hüllen aufweisen, bei denen mindestens ein Bruchteil der Umfangsfläche der Hüllen durch Stützelemente abgestützt sind, füllt,

2) die gefüllten Hüllen zuerst kontinuierlich erwärmt, um die Rötung der Wurstmasse vorzunehmen oder zu Ende zu führen,

3) die gefüllten Hüllen danach kontinuierlich erhitzt, um durch oberflächliche Koagulation der Wurstmasse eine Eigenhaut zu bilden,

4) anschliessend kühlt und schliesslich die Enden der gefüllten Hüllen öffnet und

5) die Würste ohne Beschädigung der Eigenhaut oder der Wurst als Ganzes in axialer Richtung ausstösst und die leeren Hüllen zur Füllvorrichtung zurückführt,

wobei währen der Rötung und Koagulation aus der Wurstmasse entweichende gasförmige Bestandteile in radialer Richtung durch die poröse Hülle abgegeben werden.

10. Verfahren nach Anspruch 9, dadurch gekennzeichnet, dass man Hüllen oder Vorrichtungen nach einem der Ansprüche 1 bis 8 verwendet.

## Revendications

1. Enveloppe tubulaire réutilisable pour la fabrication de saucisses sand boyau, notamment de saucisses ébouillantées ou crues, caractérisé en ce que l'enveloppe consiste au moins en majeure partie en une membrane poreuse de polytétrafluoroéthylène, ladite membrane

a) ayant une microstructure faite noeuds interconnectés par des fibrilles et comportant, par suite de cette microstructure, des voies d'écoulement pour les gas et les liquides qui empêchent pratiquement que des constituants solides ou liquides de la masse à saucisse s'échappent à travers la membrane au cours du remplissage de ladite enveloppe,

b) ayant une porosité suffisante pour permettre l'evacuation radiale, à travers ladite enveloppe, de la vapeur et des autres constituants gazeux mis en liberté au cours de l'apprêtage de la masse à saucisse enfermée dans ladite enveloppe,

c) ayant une texture superficielle propre à assurer une éjection aisée de la saucisse produite par l'apprêtage de la masse à saucisse, hors de ladite enveloppe, tout en maintenant l'intégrité de la surface de la saucisse (c'est-à-dire de sa propre peau (et de la saucisse dans son ensemble,

d) ayant les propriétés de perméabilité suivantes:

(i) un nombre Gurley de 1 à 650 secondes, tel que déterminé par la norme américaine "ASTM Method D-726-58 Method A" en utilisant une surface d'essai de 6,45 cm² (1,00 pouce carré), une hauteur de pression d'eau de 124 mm (4,88 pouces) et exprimant le temps nécessaire, en secondes, pour faire passer 100 cm³ d'air dans l'épreuve,

(ii) une pression de point de bulle de 0,21 à 4,2 kg/cm² (3 à 60 livres anglaises par pouce carré), telle que déterminée par la norme américaine "ASTM Method F-316-70" en utilisant du méthanol anhydre à 21°C et une surface d'essai de 9,6 cm²; et

(iii) une pression d'admission d'eau de 0, 49 à 42 kg/cm² (7 à 600 livres anglaises par pouce carré), telle que déterminée par la méthode suivante: en utilisant l'appareil employé dans l'épreuve d'éclatement de Mullin selon la norme américaine "Federal Standard 191, Method 5512", la pression d'eau est élevée jusqu'à une valeur d'essai en un laps de temps d'environ 10 secondes et elle est maintenue à cette valeur pendant 30 secondes, la pression, d'admission d'eau étant la pression la plus basse à laquelle on peut observer visuellement qu'une fuite survient.

2. Enveloppe suivant la revendication 1, caractérisée en ce que ladite membrane

(a) a une épaisseur de 0,01 à 5 mm, et
(b) a une porosité Q de 30 à 90%, Q étant défini comme suit:

$$Q = (1 - \frac{SG}{2,15}) 100$$

où SG est le poids spécifique de ladite membrane de polytétrafluoroéthylène.

3. Enveloppe suivant la revendication 1 ou 2, caractérisée en ce qu'un ruban plat de ladite membrane est enroulé en hélice pour former un tube et que les bords qui se chevauchent sont joinst l'un à l'autre.

4. Appareil pour la fabrication de saucisses sans boyau, notamment de saucisses ébouillantées ou crues, comportant une enveloppe tubulaire suivant l'une quelconque des revendications 1 à 3, pour la masse à saucisse, caractérisé en ce qu'une partie au moins de la surface externe de ladite enveloppe est soutenue par des éléments de support.

5. Appareil suivant la revendication 4, caractérisé par une structure en treillis (1) comportant plusieurs côtes longitudinales parallèles (2) disposées à la periphérie d'un cylindre imaginaire et renforcées par des côtes transversales (3) de forme annulaire, et un anneau de fixation (8) disposé à chaque extrémité de la structure en treillis (1) pour fixer de manière amovible les extrémités de l'enveloppe (5).

6. Appareil suivant la revendication 4 ou 5, caractérisé en ce que lesdits éléments de support comportent une gaine tubulaire de support ayant une paroi pleine maise poreuse et dont chacune des portions terminales comporte un dispositif pour assurer une fixation aisément amovible des extrémités de l'enveloppe, ladite gain de support consistant, de préférence, en un métal fritté ou en un matériau non métallique, poreux, perméable à l'air, tel que du verre fritté.

7. Appareil suivant la revendication 6, caractérisé en ce que les extrémités de l'enveloppe (23) sont retournées sur la portion terminale (21a) de la gaine de support (21) et que chaque portion terminale (21a) de ladite gaine de support comporte un bourrelet de support (27) sur lequel sont fixées les griffes pivotantes (25) d'un capuchon (24), le capuchon (24) comportant un évidement (28) dans lequel est fixé un ressort en spirale (29) dont l'extrémité opposée est adjacente à la face terminale (30a) d'un piston mobile (30) disposé dans le capuchon (24) pour exécuter un mouvement axial (Fig. 11 à 13).

8. Appareil suivant la revendication 6, caractérisé en ce que l'enveloppe (19) est disposée autour de la gaine de support (18) de manière à envelopper complètement cette dernière, les extrémités de l'enveloppe (19a/19b) se chevauchant l'une l'autre sur la surface externe de la gaine de support (18) et le chevauchement comportant une jointure soudée circulaire (20) (Fig. 9 et 10).

9. Procédé de fabrication de saucisses sans boyau, notamment de saucisses crues ou, de préférence, ébouillantées, mettant en oeuvre l'enveloppe suivant la revendication 1, caractérisé en ce que

1) l'on remplit automatiquement de masse à saucisse, cas échéant prérougie, lesdites enveloppes tubulaires réutilisables ou des appareils comportant de telles enveloppes, au moins une partie de la surface externe desdites enveloppes étant soutenue par des éléments de support,
2) on chauffe d'abord de manière continue les enveloppes remplies, afin d'effectuer ou d'achever le rougissement de la masse à saucisse,
3) on chauffe ensuite de manière continue les enveloppes remplies, afin de former une peau propre par coagulation superficielle de la masse à saucisse,
4) on refroidit ensuite et, finalement, on ouvre les extrémités des enveloppes remplies et
5) on éjecte les saucisses en direction axiale, sans endommager leur propre peau ou la saucisse dans son ensemble, et l'on renvoie les enveloppes vides au dispositif de remplissage,

les constituants gazeux mis en liberté à partir de la masse à saucisse pendant le rougissement et la coagulation étant évacués radialement à travers la membrane poreuse.

10. Procédé suivant la revendication 9, caractérisé par l'utilisation d'enveloppes ou d'appareils suivant l'une quelconque des revendications 1 à 8.

Fig.1

Fig.2

Fig.3

Fig.4

# 0 028 858

Fig. 5

Fig. 6

Fig. 7

Fig. 8

2

Fig.9

Fig.10

4/4

Fig. 11

Fig. 12

Fig. 13